# EUROPEAN PATENT APPLICATION

(11) **EP 3 561 340 A1**
(43) Date of publication of application: **30.10.2019**
(21) Application number: 19167697.2
(22) Date of filing: 05.04.2019
(51) Int. Cl.: F16H 59/08, F16H 61/22

(54) **ROTARY SHIFTER WITH SELECTIVE LOCKING AND POSITION RESET**

(30) Priority: 23.04.2018 US 201815959704
(71) Applicant: Dura Operating, LLC, Auburn Hills, MI 48326 (US)
(72) Inventor: Jiran, Joseph D., Fremont, MI 49412 (US)
(74) Representative: Neumann Müller Oberwalleney & Partner Patentanwälte

(57) **Abstract**

In at least some implementations a shifter for a vehicle transmission includes a selector body rotatable among multiple positions, a drive member rotatable among multiple positions and a retainer. The retainer is movable between a first position in which the retainer prevents rotation of the selector body, and a second position in which the retainer permits rotation of the selector body. During a portion of the range of rotation of the drive member, the drive member drives the retainer from one or both of the first position and the second position to the other of the first position and second position, and the drive member selectively engages the selector body to rotate the selector body.

## Description

### Technical Field

The present disclosure relates generally to a gear shift system for a vehicle transmission.

### Background

In some vehicles, a gear shift lever in a passenger compartment of the vehicle can be moved by an operator of the vehicle to shift the vehicle transmission between its park gear and other gears, such as reverse, neutral and forward drive gears. The shift lever is mechanically coupled to the transmission through a cable that transmits the shift lever movement to a transmission shift mechanism. Other vehicles use a so-called "shift-by-wire" system wherein an operator shift lever or shift control unit is not physically coupled to the transmission shift mechanism by a cable. Instead, the shift control unit is electrically coupled to a shift actuator that is arranged to shift the transmission upon receipt of a signal from the shift control unit that a transmission gear shift is desired by the operator. It may be desirable, in at least some circumstances, to selectively prevent movement of the shift lever to prevent shifting the transmission at least until certain conditions are satisfied. For example, to shift the transmission out of park, a vehicle brake may need to be depressed or some other driver action may be needed. In some instances, it may be desirable to shift the transmission without a user command to do so.

### Summary

In at least some implementations a shifter for a vehicle transmission includes a selector body rotatable among multiple positions, a drive member rotatable among multiple positions and a retainer. The retainer is movable between a first position in which the retainer prevents rotation of the selector body, and a second position in which the retainer permits rotation of the selector body. During a portion of the range of rotation of the drive member, the drive member drives the retainer from one or both of the first position and the second position to the other of the first position and second position, and the drive member selectively engages the selector body to rotate the selector body.

In at least some implementations, the drive member may include a first drive surface that engages the retainer to move the retainer relative to the selector body. The first drive member also may include a first area and, when the first area is aligned with the retainer, the retainer is at a first distance from the selector body and the drive member includes a second area and, when the second area is aligned with the retainer, the retainer is at a second distance from the selector body that is different than the first distance. The drive member may include a cam surface arranged between the first area and the second area. The first area and second area may be circumferentially spaced apart and the retainer may move in an axial direction relative to the selector body when the drive member is rotated from a first position wherein the first area is aligned with the retainer to a second position wherein the second area is aligned with the retainer.

In at least some implementations, the drive member includes a retaining surface engageable with the retainer to hold the retainer in either the first position or second position. The drive member may be coaxial with the selector body and rotatable about the same axis as the selector body. The drive member may include a second drive surface selectively engageable with the selector body to rotate the selector body upon rotation of the drive member when the second drive surface is engaged with the selector body. The drive member may be annular and arranged radially outwardly from the selector body.

In at least some implementations, the shifter may also include an actuator coupled to the drive member to rotate the drive member relative to the retainer and the selector body. One or more gears may be arranged between the actuator and the drive member to increase the rotational speed or the torque between the actuator and the drive member. And the drive member may include teeth arranged to be meshed with teeth of a gear driven for rotation by the actuator. To provide a torque increase at the drive member, the drive member may be larger than the gear with which it is meshed.

In at least some implementations, a shifter for a vehicle transmission includes a selector body rotatable about an axis and among multiple positions to shift among gears in the transmission, a rotary actuator operable in both rotary directions, a drive member rotatable by the actuator about the axis and among multiple positions, and having a first drive surface that is inclined axially and a second drive surface and a retainer. The retainer is movable between a first position in which the retainer prevents rotation of the selector body, and a second position in which the retainer permits rotation of the selector body. During a portion of the range of rotation of the drive member the first drive surface engages the retainer to axially move the retainer from the first position to the second position. And during a portion of the range of rotation of the drive member the second drive surface engages the selector body to rotate the selector body with the drive member.

In at least some implementations, the retainer, when in the first position, overlaps a portion of the selector body to prevent rotation of the selector body in at least one direction. The retainer, when in the second position, may be spaced from the selector body to permit rotation of the selector body relative to the retainer. The selector body may include an outwardly extending tab or other surface arranged to be engaged by the second drive surface. In at least some implementations, the drive member rotates relative to the selector body when the second drive surface is not engaged with the selector body.

### Brief Description of the Drawings

The following detailed description of some implementations of a shifter will be set forth with regard to the accompanying drawings, in which:
FIG. 1 is a top perspective view of a portion of a rotary shifter assembly with a first cover of a housing removed to show internal components;
FIG. 2 is a bottom perspective view of the shifter assembly with a second cover of the housing removed to show internal components;
FIG. 3 is a perspective view of a portion of the shifter assembly removed from the housing, showing the shifter in a first position and a retainer in a first position;
FIG. 4 is an enlarged, perspective and sectioned view of a portion of the shifter assembly mounted within the housing and showing the retainer in the first position;
FIG. 5 is an enlarged, fragmentary view showing the retainer in the first position;
FIG. 6 is a view similar to FIG. 5 showing the retainer in the second position;
FIG. 7 is a view similar to FIG. 3 showing the shifter in the first position and the retainer in the second position;
FIG. 8 is a view similar to FIG. 7 showing the shifter in a second position and the retainer in the second position;
FIG. 9 is a view similar to FIG. 8 showing the shifter in a third position and the retainer in the second position;
FIG. 10 is a view similar to FIG. 9 showing the shifter in the third position and the retainer in the first position;
FIG. 11 is a view similar to FIG. 10 showing the shifter in a fourth position and the retainer in the second position;
FIG. 12 is a perspective view of the shifter assembly taken from a different angle and showing the shifter in the fourth position and a reset actuator in a first position;
FIG. 13 is a view similar to FIG. 12 showing the shifter in the first position and the reset actuator in a second position; and
FIG. 14 is a view similar to FIG. 3 showing the shifter in the first position and the retainer in the first position.

### Detailed Description

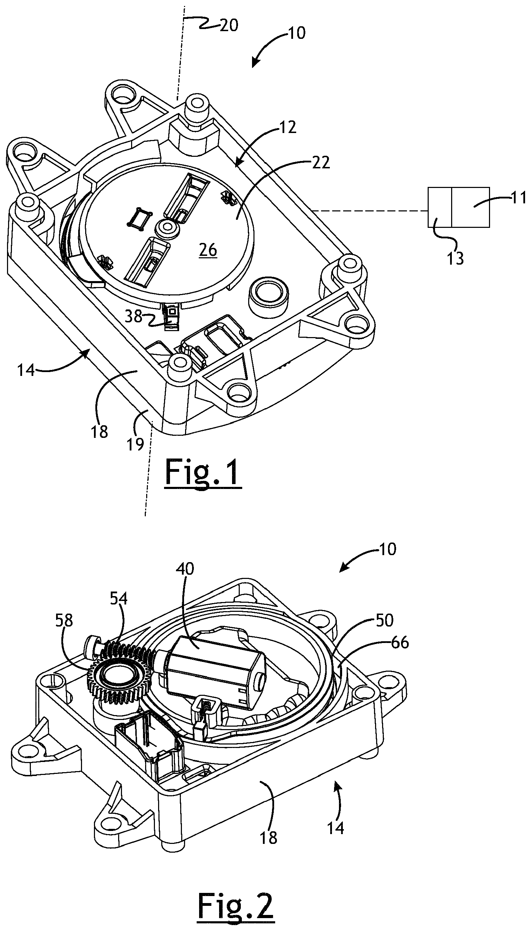

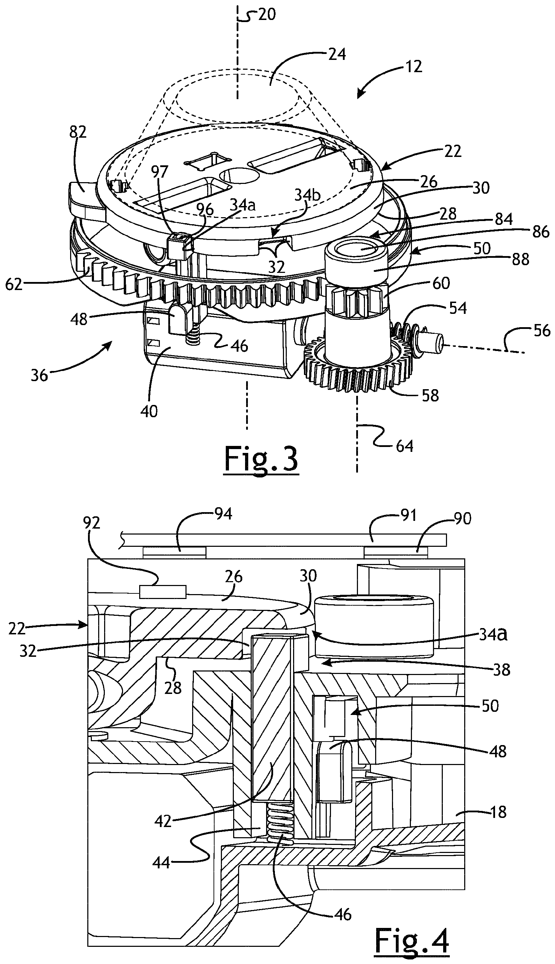

Referring in more detail to the drawings, FIGS. 1 and 2 illustrate a rotary gear shifter 10 that may be used to shift among various gears of a transmission 11. In at least some implementations, the shifter 10 is not directly mechanically coupled to the transmission 11 and instead communicates electrically with an actuator 13 coupled to the transmission 11 that, in turn, causes a change in the selected transmission gear in a so-called shift-by-wire system. The shifter 10 may include a first shift member, such as a dial, knob or other rotary selector (shown diagrammatically and transparent in FIG. 3), that may be manually rotated by a user through multiple positions corresponding to multiple gears of the vehicle transmission. By way of non-limiting examples, the selector 12 may include and be rotated to one or more positions that correspond to park, reverse, neutral and drive gears of the vehicle transmission 11.

The selector 12 may be mounted to a housing 14 (only part of which is shown to better illustrate internal components) that is arranged to be mounted within a vehicle. The housing 14 may have a base 18, a first cover (not shown) or bezel coupled to the base, and a second cover 19 to define an at least partial enclosure for the selector 12 and related shifter components, as set forth below. The first cover may be at least partially exposed within a vehicle passenger compartment and which may surround or partially cover the rotary selector 12, which may be carried by the housing 14 for rotation relative to the housing about a central axis 20.

As shown in FIGS. 1 and 2, a selector body 22 may be carried by the base 18 for rotation about the axis 20. A knob 24 (shown diagrammatically in FIG. 3) or other portion of the selector 12 engageable by a user may be coupled to or formed in the same piece of material as the selector body. As shown in FIGS. 3 and 4, the selector body 22 is generally disc-shaped, with an upper face 26 facing the knob 24, a lower face 28 that faces in the opposite direction (e.g. toward the base 18 or bottom cover 19 of the housing 14) and an axially and circumferentially extending sidewall 30 at the radial outer surface of the selector body 22. The selector body 22 may include one or more stop surfaces 32. In the implementation shown, the stop surfaces 32 are defined by voids 34 in the selector body 22 that are open to the lower face 28 of the selector body. In the example shown, there are two voids and they are labelled 34a and 34b in various figures. The stop surfaces 32 may extend axially and radially and provide a surface engageable by another component to selectively prevent rotation of the selector body 22 as set forth in more detail below.

As shown in FIGS. 2-14, to selectively control rotation of the selector 12, the shifter 10 includes an actuator and retainer assembly 36. The actuator and retainer assembly 36 may include a retainer 38 selectively positionable to prevent rotation of the selector body 22 and an actuator 40 that selectively drives the retainer and the selector body. The retainer 38 may be carried by the housing 14 and, as shown in FIG. 4, may include a body 42 slidably received in a cavity 44 of the housing base 18 for movement relative to the selector body 22. In at least some implementations, the retainer 38 is driven by the actuator 40 between a first position in which rotation of the selector body 22 is inhibited or prevented and a second position in which the selector body 22 may be rotated to cause a transmission gear change. In the example shown in the drawings, the retainer 38 is slidably movable along a straight, linear path between the first and second positions, and the path is parallel to the axis 20 of rotation of the selector body 22. Further, the retainer 38 is urged toward its first position by a biasing member such as a spring 46 received between the housing 14 and the retainer 38. Thus, unless the actuator 40 moves the retainer 38 to or toward its second position against the force of the spring 46, the spring will tend to displace the retainer to or toward its first position. Of course, other arrangements may be used including but not limited to arrangements wherein the retainer 38 does not move linearly or parallel to the axis 20, wherein the actuator 40 moves the retainer 38 to both the first and second positions without a biasing member or wherein the retainer is biased toward the second position and the retainer moves the retainer to the first position against the force of the biasing member. The retainer 38 includes a drive feature engageable a drive member 50 of other actuating member to permit the actuator to drive the retainer as described above and below. In at least some implementations, the retainer 38 includes a follower 48 engageable by a cam or cam surface moved relative to the follower 48 by the actuator 40.

The actuator 40 may move the drive member 50 relative to the retainer 38 to selective engage and move the retainer relative to the selector body 22. The actuator 40 may be any desired form of rotary or linear actuator suitable to move the drive member 50 relative to the retainer 38 as set forth below. In the example shown, the actuator 40 is a reversible electric motor that is coupled to the drive member 50 to rotate the drive member in two opposed directions.

In at least some implementations, one or more gears are provided between the drive member 50 and the motor 40 to, for example, provide a speed or an increase in torque between the motor and the drive member which may permit use of a smaller, lighter, less powerful and less expensive motor and/or provide a faster response in the shifter. In the example shown, a worm gear 54 or lead screw is driven by the motor 40 for rotation about an axis 56 that is not parallel to and may be perpendicular to the selector axis 20. The worm gear 54 is meshed with a first gear 58 that drives a second gear 60 fixed to the first gear for co-rotation with the first gear. The second gear 60 is meshed with teeth 62 carried by or otherwise rotatably associated with the drive member 50 so that the drive member co-rotates with the second gear. The first gear 58 may be larger and have more teeth than the second gear 60, if desired. The drive member 50 may in turn have a larger diameter than the second gear 60 (and the first gear 58) which provides a torque increase between the second gear 60 and the drive member 50. In at least some implementations, the gear ratio between the first and second gears 58, 60 may be between 20:1 and 35:1, and the gear ratio between the second gear 60 and drive member 50 may be between 5:1 and 8:1. In at least some implementations, the drive member 50 is coaxial with the selector body 22, and the first gear 58 and second gear 60 rotate about an axis 64 that is radially offset from and parallel to the selector axis 20. Other gear arrangements may be used including but not limited to planetary gears, compound planetary gears, wobble gears, bevel gears, etc.

The drive member 50 may be annular and may be received around or axially spaced from the selector body 22. In the example shown, the drive member 50 has a larger outer diameter than the selector body 22 and is received within an annular channel 66 (FIG. 2) in the base 18 of the housing 14 and is located axially closer to the lower surface 28 of the selector body 22 than the upper surface 26. Of course, the drive member 50 may be located closer to the upper surface 26 and/or radially aligned with and outboard of the selector body 22 if desired.

In at least some implementations, the drive member 50 includes or engages and drives a cam 68 relative to the retainer 38, to actuate the retainer. In at least some implementations, the cam is integral or formed in the same body as the remainder of the drive member 50 and may be defined by one or more cam surfaces 70 that are movable relative to and selectively engageable with the retainer 38 (e.g. the follower 48 of the retainer 38) to move the retainer. In the example shown, the drive member 50 has two cam surfaces 70 that are inclined (e.g. axially) relative to the selector axis 20 and circumferentially spaced apart. The cam surfaces 70 are also aligned (e.g. radially relative to the axis 20) with the follower 48 of the retainer 38 and inclined in opposite directions relative to the selector axis 20. In the example shown, the cam surfaces 70 are axially inclined with one end of each cam surface axially closer to the selector body 22 than the other end of the cam surface. When the drive member 50 is rotated in one direction a first cam surface 70 engages the retainer 38 (e.g. engages the follower 48) and moves the retainer toward the second position, and when the drive member 50 is rotated in the other direction a second cam surface 70 engages the retainer 38 and moves the retainer toward the second position.

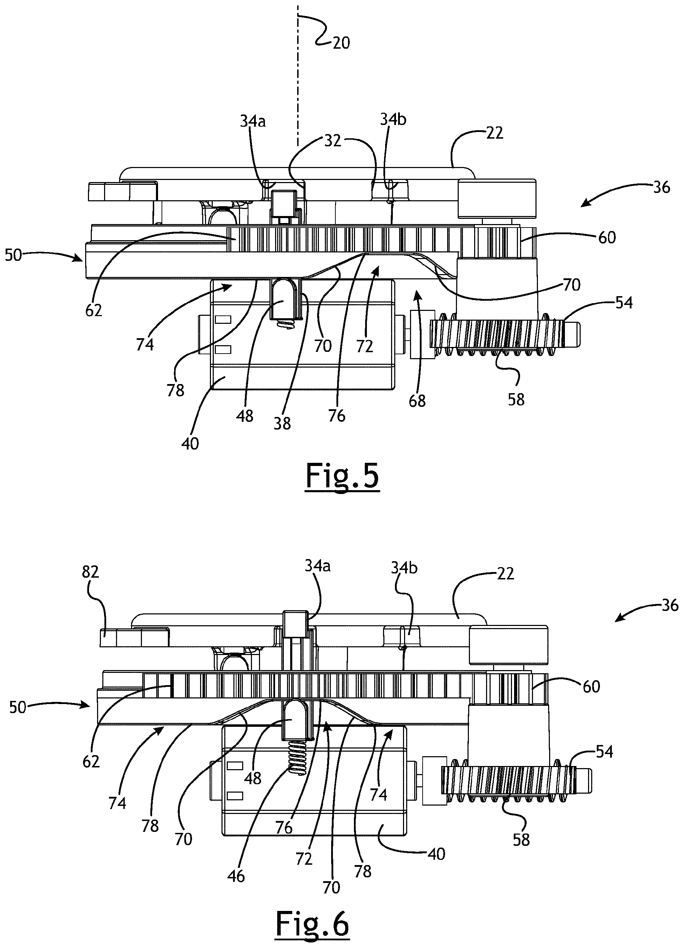

As shown in FIGS. 5 and 6, the inclined cam surfaces 70 may transition between a first area 72 of the drive member 50 and a second area 74 of the drive member. When the first area 72 is aligned with the follower 48, the retainer 38 is at different distance from the selector body 22 than when the second area 74 is aligned with the retainer 38 so that rotation of the drive member 50 relative to the retainer displaces the retainer relative to the selector body 22. At least one of the first and second areas 72, 74 may include or be defined by a retaining surface that engages the retainer 38 (e.g. the retainer direction or a component coupled to the retainer) to positively maintain a desired position of the retainer relative to the selector body 22. A first retaining surface 76 may be defined in the first area 72 and circumferentially between the cam surfaces 70, or positioned elsewhere along the circumferential extent of the drive member 50. And a second retaining surface 78 may be rotationally or circumferentially outboard of or at the end of either cam surface 70 opposite the first retaining surface 76. Thus, in implementations with two cam surfaces 70, the drive member 50 may have two second retaining surfaces 78, each defined at a circumferential end of a respective one of the cam surfaces 70. Both first and second retaining surfaces 76, 78 need not be provided to engage the retainer 38. Instead, in one position of the retainer 38, the retainer may engage another component, such as the selector body 22, without engaging the drive member 50 or cam. Then, upon rotation of the drive member 50, a cam surface 70 and or retaining surface of the drive member may engage the retainer 38 to move the retainer away from the selector body 22. Thus, in either the first or second area 72, 74, the retainer 38 might not engage the drive member 50, in at least some implementations. The remainder of the discussion of the illustrated embodiments will be made as if the retainer 38 engages first and second retaining surfaces 76, 78 of the drive member 50 in both the first and second positions of the retainer.

In at least some implementations, the first retaining surface 76 is defined by a portion of the drive member 50 that is axially closer to the selector body 22 than the portion(s) of the drive member that defines the second retaining surface(s) 78. When the first retaining surface 76 is aligned with the follower 48 of the retainer 38, the spring 46 is able to displace the retainer 38 toward or into engagement with the selector body 22. When the second retaining surface 78 is aligned with the follower 48, the drive member 50 moves the retainer 38 to its second position, spaced from the selector body 22, against the force of the spring 46. Of course, the assembly could be arranged so that the opposite movement of the retainer 38 occurs, or so that the retainer 38 moves radially as driven by radially variable cam surfaces and/or radially offset first and second retaining surfaces, among other possibilities.

In at least some implementations, as shown in FIGS. 3-5, the retainer 38 may be positioned to prevent rotation of the selector body 22 when the selector 12 is in the position corresponding to the transmission being in park. In this position, the first retaining surface 76 of the drive member 50 is rotationally aligned with the follower 48 of the retainer 38 and the spring 46 moves the retainer to the first position. This position is achieved by causing the actuator 40 to rotate the drive member 50 to the position shown in FIG. 3. In this position, part of the retainer 38 axially and radially overlaps at least one stop surface 32 of the selector body 22 to prevent rotation of the selector 12 in at least one direction. In the implementations shown, the retainer 38 is partially received within a first void 34a in the selector body 22 that includes rotationally or circumferentially opposed stop surfaces 32 that engage the retainer 38 upon attempted rotation of the selector 12 to prevent rotation of the selector in either direction. This holds the selector 12 in the park position and inhibits or prevents unintended shifting of the transmission out of park.

To shift the transmission out of park, a driver may have to take some action before rotating the selector 12, such as applying a vehicle brake. Upon detection that the vehicle brake has been applied (and/or other required step has been performed or condition has occurred), the actuator 40 may be energized to rotate the gears 54, 58, 60 and rotate the drive member 50 in a first direction relative to the retainer 38. Doing so engages a cam surface 70 with the follower 48 and drives the retainer 38 to its second position in which the retainer is not overlapped with and is spaced from the selector body 22 so that the selector body may be rotated relative to the retainer.

Similarly, in some instances, such as when a vehicle transmission has been in the neutral gear position for longer than a threshold time, it may be desirable to prevent shifting out of neutral without the driver taking some prerequisite action prior to rotating the selector 12. This is a so-called neutral lock. Such driver action may be applying the brake or pushing a button, for example. Upon detection that the transmission has been in neutral for longer than the threshold time, the actuator 40 may be commanded to rotate the drive member 50 and drive the retainer 38 to the first position wherein the retainer overlaps a stop surface 32 to prevent rotation of the selector body 22. And upon detection of the prerequisite driver action to shift out of neutral, the actuator 40 may drive the retainer 38 to the second position that permits the selector body 22 to be rotated relative to the retainer 38 so that the selector 12 may be rotated to shift the transmission out of neutral. The stop surface 32 associated with the position of the selector 12 when the transmission is in neutral may be circumferentially offset from the stop surface(s) 32 associated with the stop position. The neutral position stop surfaces may be defined in a void 34b in the selector body 22, or by circumferentially offset stop surfaces 32 between which a portion of the retainer 38 is received. In this way, a single retainer 38 may be used to provide both the park lock and neutral lock for the selector 12, as the selector body 22 is rotated relative to the retainer 38. Of course, other arrangements are possible.

In at least some implementations, it may be desirable to move the selector 12 without driver input to cause a transmission gear change. For example, if a vehicle is turned off without first rotating the selector 12 to shift the transmission to park, it may be desirable to automatically shift the vehicle transmission into park. In at least some implementations, in addition to (or instead of) driving the retainer 38, the actuator assembly 36 may drive the selector body 22 to change the position of the selector 12. In this regard, the drive member 50 may include at least one second drive surface 80 arranged to engage and rotate the selector body 22 during a portion of the rotation of the drive member 50. The selector body 22 may include an engagement surface 82 that is engaged by the second drive surface 80 of the drive member 50. In at least some implementations, the second drive surface 80 is defined by a projection that extends outwardly from the drive member and toward the selector body 22, and the engagement surface is defined by an outwardly extending tab 82 fixed to or formed in one piece with the selector body 22. In the example shown, the second drive surface 80 extends axially toward the selector body 22 and the tab 82 extends radially outwardly toward the drive member 50.

To avoid changing the position of the selector 12 during normal locking and unlocking of the selector via the retainer 38 as described above, the second drive surface 80 may be circumferentially offset from the tab 82 by an angular amount sufficient to permit movement of the selector 12 among and between each of its positions (e.g. park, reverse, neutral and forward drive gear(s)) and to permit rotation of the drive member 50 to actuate the retainer 38 without driving engagement of the second drive surface 80 with the tab 82. In the example shown, the second drive surface 80 is offset from the tab 82 by an angle (relative to axis 20) at least equal to the maximum rotation of the selector body 22 between its first (e.g. park) and last (e.g. drive) positions. In the example shown, the second drive surface 80 is offset from the first retaining surface 76 by greater than 90 degrees, although other arrangements may be used. In at least some implementations, the actuator 40, through the drive member 50, may move the selector 12 from any position back to the position corresponding to park. In other words, the second drive surface 80 is arranged to move the selector 12 through its full rotary range of motion. In at least some implementations, during normal operation of the selector 12, the tab 82 and second drive surface 30 are circumferentially spaced apart the greatest amount when the selector is in the park position and are closest together when the selector is in the position rotated farthest from park (e.g. drive).

The shifter 10 may include one or more position sensors to provide a positive indication of the position of one or more components, such as the drive member 50 or selector body 22. As shown in FIGS. 3, 7 and 8 (among others), a first rotary position sensor element 84 may be coupled to the second gear 60 and is shown as including a magnet 86 received within a cavity of a magnet carrier 88 coupled to the second gear 60 for rotation with the second gear. A corresponding sensor 90 (FIG. 4) may be carried by or coupled to a circuit board 91 or other component and may be a hall-effect or other type of sensor responsive to movement of the magnet 86 as the second gear 60 rotates. Of course, sensor types other than magnetic may be used, as desired, including but not limited to optical and contact based resistive sensors (e.g. potentiometers). The sensor is thus able to determine the rotary position and movement of the drive member 50 which is rotatably coupled to the second gear 60. In this way, the position of the retainer 38 can be determined as a function of the position of the drive member 50, and the relative position of the selector 12 can be determined as a function of the position of the drive member 50 when rotated to drive the selector 12 as noted above. Whether the retainer 38 is in its first or second position can also be determined by a sensor element 96 (e.g. a magnet) carried by the retainer, such as in a cavity 97, as shown in FIG. 3. A sensor responsive to the movement of the magnet 96 may be carried by the circuit board or otherwise arranged as desired.

Another sensor element 92 (e.g. a magnet) may be carried by the selector body 22 and another sensor 94 may be provided on the circuit board 91 or otherwise, that is responsive to the movement of the sensor element 92 during rotation of the sensor element 92. In this way, the rotational position of the selector body 22 may be determined so that the relative positions of the selector body 22 and the drive member 50 may be known in the various positions of these components.

The operation of the shifter 10 will now be described. In FIG. 3, the shifter 10 is shown in the first or park position. In this position, the selector 12 is in a first position that corresponds to the transmission being in park, the drive member 50 is arranged so that the first retaining surface 76 is rotationally aligned with the retainer follower 48 and the retainer 38 is in the first position in which the retainer prevents rotation of the selector 12. In more detail, the retainer 38 is received within the first void 34a and overlaps the stop surfaces 32 of the first void to prevent rotation of the selector body 22.

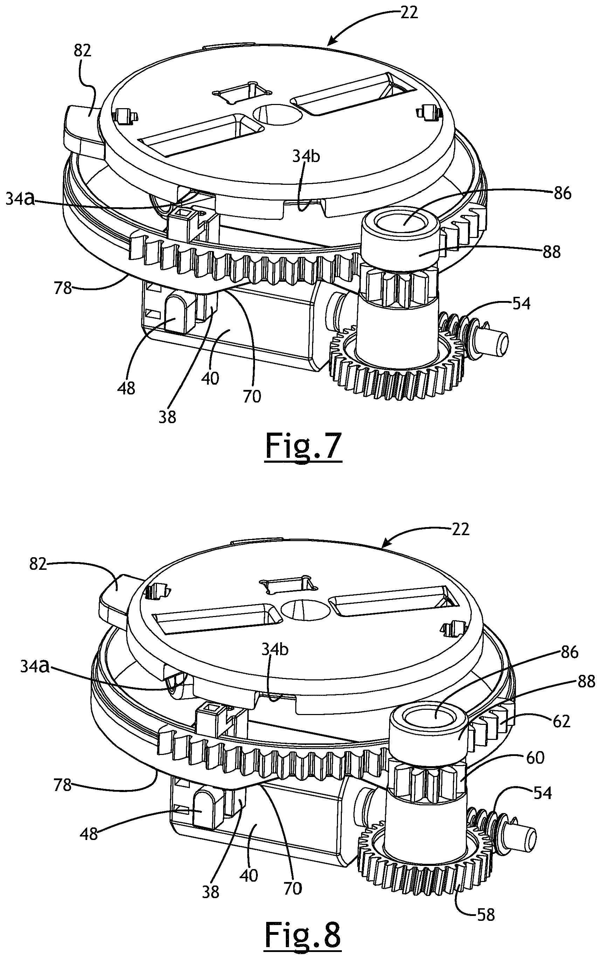

To permit rotation of the selector 12 out of the park position, as shown in FIGS. 6 and 7, the actuator 40 may be energized to rotate the drive member 50 in a first direction, shown as clockwise in FIG. 7. This rotation of the drive member 50 engages a cam surface 70 with the retainer follower 48 and displaces the retainer 38 away from the selector body 22, and may align a second retaining surface 78 with the follower 48 to hold the retainer in the second position spaced from the selector body 22. Movement of the retainer 38 to the second position may occur in response to the driver taking some prerequisite action, such as actuating a vehicle brake or otherwise. In this position of the retainer 38, the selector 12 may be rotated out of the park gear without the retainer interfering or blocking rotation of the selector body 22.

FIG. 8 illustrates the selector 12 in the second, or reverse position wherein the selector body 22 has been rotated out of the park position. This can be noted by comparison of the position of the first void 34a in the views of FIGS. 7 and 8. The retainer 38 remains in the second position permitting rotation of the selector body 22 and selector. In other words, the rotation of the selector 12 from park to reverse may occur without any rotation of the drive member 50 or actuator 40.

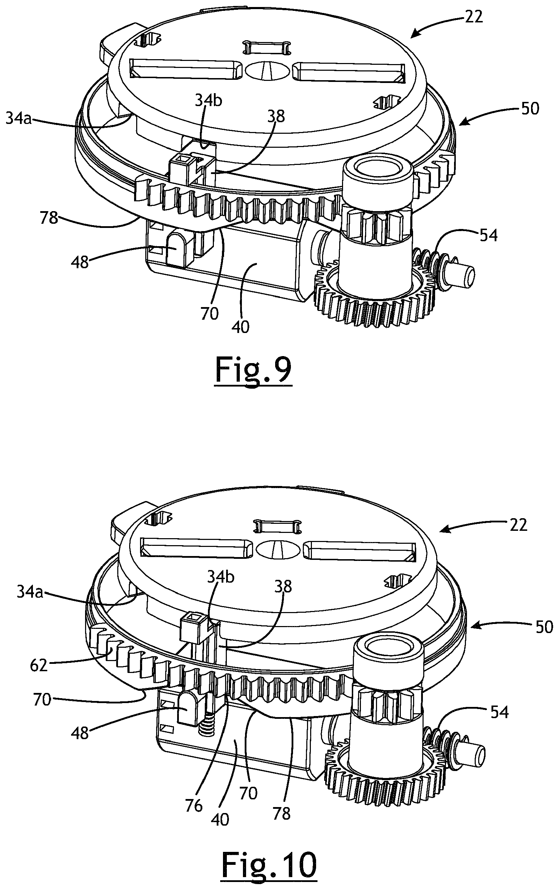

FIG. 9 illustrates the selector 12 in the third position and retainer 38 held in its second position. In this position of the shifter 10, the vehicle transmission is in neutral and the selector 12 may be rotated from the third position back to the second position or into a fourth position (corresponding to the transmission being in a forward drive gear). In at least some implementations, if one or more criteria are met, the actuator 40 may be actuated to rotate the drive member 50 in a second direction (counterclockwise in FIG. 9) to align the first retaining surface 76 of the drive member 50 with the retainer 38 so that the retainer may move to its first position, as shown in FIG. 10. In this position, the retainer 38 is received within the second cavity 34b in the selector body 22 and the retainer blocks rotation of the selector 12 out of the third position. To subsequently permit rotation of the selector 12 to shift the transmission out of neutral, the actuator 40 is actuated to drive the drive member 50 in the first direction to displace the retainer 38 to its second position which is shown in FIG. 9. This may occur, for example, when the driver has actuated the vehicle brake or taken some other prerequisite action.

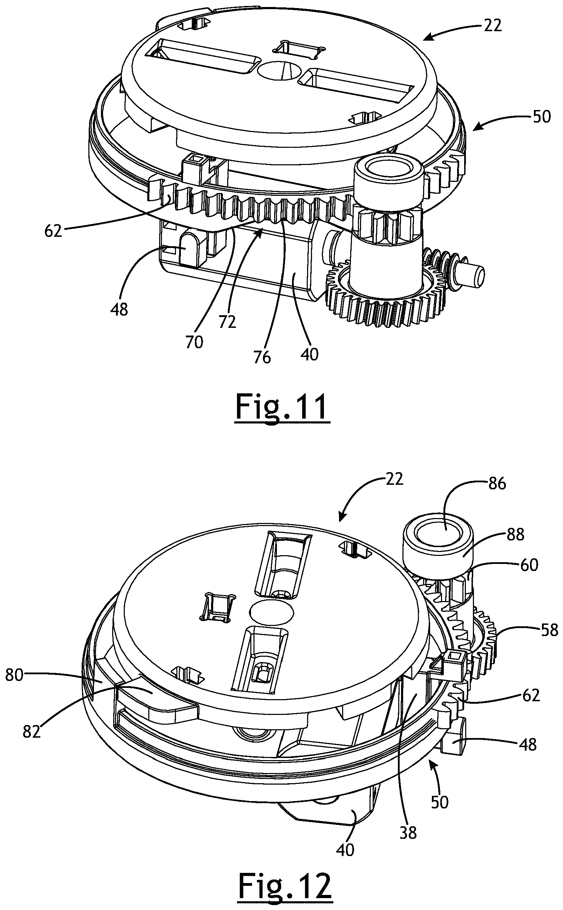

After this retainer movement, the selector 12 can be rotated to the fourth or drive position, as shown in FIG. 11, or to the second or first position. In the fourth position of the selector 12, the retainer 38 is in its second position permitting rotation of the selector.

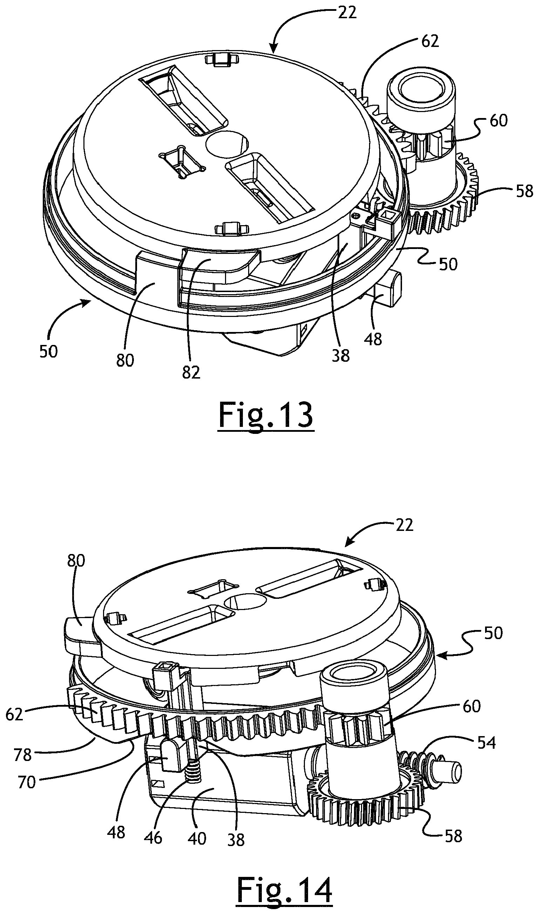

In at least some implementations, when the selector 12 is in a position other than the first position, the selector 12 may be reset to the first position as noted above. To do this in the example shown, the actuator 40 drives the drive member 50 until the second drive surface 80 engages the tab 82 of the selector body 22, as shown in FIG. 12, and then the drive member 50 is further rotated to rotate the selector body 22, as shown in FIG. 13. In FIG. 13, the selector 12 is in its first position and the drive member 50 is fully rotated with the retainer 38 held in its second position. Thus, the drive member 50 includes teeth 62 along a sufficient circumferential extent to permit a desired rotation of the drive member 50 by the actuator 40 (via the second gear 60) to return the selector 12 to its first position. And the drive member 50 is arranged so that if the drive member rotates the first retaining surface 76 into alignment with the retainer follower 48, it does so during a portion of the rotation wherein the retainer 38 is not aligned with a cavity 34 or stop surface 32 of the selector body 22 so that the retainer does not engage a stop surface and prevent rotation of the selector.

When the selector 12 reaches its desired position as driven by the actuator 40 and drive member 50 (e.g. park, or sometimes neutral to permit the vehicle to be more easily towed), the drive member 50 may be reset to position the second drive surface 80 in a desired position relative to the tab 82 and permit subsequent rotation of the selector 12 by a user. In at least some implementations, the drive member 50 is rotated to align the first retaining surface 76 with the retainer 48 follower so that the retainer 38 moves to its first position. The selector 12 is then in the park lock position, and rotation of the selector out of park is prevented unless the prerequisite action(s) are taken, as noted above. Thus, the drive member 50 may be rotated in the first direction and relative to the selector body 22 to the position shown in FIG. 14, which is the same position as shown in FIG. 3. As noted above, the selector 12 could instead be rotated to a different position, such as the neutral position shown in FIG. 9, and the drive member 50 may be rotated to the position shown in FIG. 10 to put the shifter into the neutral lock position, if desired.

Accordingly, a drive member 50 may drive both a retainer 38 relative to a selector 12 to selectively prevent rotation of the selector and may also drive the selector among various positions. The drive member 50 may be driven by an actuator 40 that may be actuated in one or two directions to rotate the drive member among its various positions. Hence, a single actuator 40 may be used to enable locking and unlocking of the shifter selector 12, and to drive the selector from one position to another. The drive member 50 may be coaxial with the selector 12 and arranged adjacent to the selector to provide a compact and efficient arrangement of the selector, and the actuator and retainer assembly.

While the forms of the invention herein disclosed constitute presently preferred embodiments, many others are possible. It is not intended herein to mention all the possible equivalent forms or ramifications of the invention. It is understood that the terms used herein are merely descriptive, rather than limiting, and that various changes may be made without departing from the spirit or scope of the invention.

## Claims

1. A shifter for a vehicle transmission, comprising:
a selector body rotatable among multiple positions;
a drive member rotatable among multiple positions; and
a retainer movable between a first position in which the retainer prevents rotation of the selector body, and a second position in which the retainer permits rotation of the selector body, and wherein, during a portion of the range of rotation of the drive member, the drive member drives the retainer from one or both of the first position and the second position to the other of the first position and second position, and the drive member selectively engages the selector body to rotate the selector body.

2. The shifter of claim 1 which also includes an actuator coupled to the drive member to rotate the drive member relative to the retainer and the selector body.

3. The shifter of claim 1 or 2 wherein the drive member includes a first drive surface that engages the retainer to move the retainer relative to the selector body.

4. The shifter of any of claims 1 to 3 wherein the drive member includes a first area and, when the first area is aligned with the retainer, the retainer is at a first distance from the selector body and the drive member includes a second area and, when the second area is aligned with the retainer, the retainer is at a second distance from the selector body that is different than the first distance.

5. The shifter of claim 4 wherein the drive member includes a cam surface arranged between the first area and the second area.

6. The shifter of claim 4 or 5 wherein the first area and second area are circumferentially spaced apart and the retainer moves in an axial direction relative to the selector body when the drive member is rotated from a first position wherein the first area is aligned with the retainer to a second position wherein the second area is aligned with the retainer.

7. The shifter of any of claims 1 to 6 wherein the drive member includes a retaining surface engageable with the retainer to hold the retainer in either the first position or second position.

8. The shifter of any of claims 1 to 7 wherein the drive member is coaxial with the selector body, preferably wherein the drive member is annular and arranged radially outwardly from the selector body.

9. The shifter of claim 8 wherein the drive member includes a second drive surface selectively engageable with the selector body to rotate the selector body upon rotation of the drive member when the second drive surface is engaged with the selector body.

10. The shifter of any of claims 2 to 9 which includes one or more gears arranged between the actuator and the drive member to increase the rotational speed or the torque between the actuator and the drive member.

11. The shifter of claim 10 wherein the drive member includes teeth arranged to be meshed with teeth of a gear driven for rotation by the actuator, preferably wherein the drive member is larger than the gear with which it is meshed to provide a torque increase between the drive member and the gear with which it is meshed.

12. The shifter of any of claims 2 to 11 wherein
the drive member has a first drive surface that is inclined axially and a second drive surface, and wherein during a portion of the range of rotation of the drive member the first drive surface engages the retainer to axially move the retainer from the first position to the second position, and during a portion of the range of rotation of the drive member the second drive surface engages the selector body to rotate the selector body with the drive member.

13. The shifter of any of claims 1 to 12 which also includes a biasing member acting on the retainer to bias the retainer toward the first position.

14. The shifter of any of claims 1 to 13 wherein the retainer, when in the first position, overlaps a portion of the selector body to prevent rotation of the selector body in at least one direction, and wherein the retainer, when in the second position, is spaced from the selector body to permit rotation of the selector body relative to the retainer.

15. The shifter of any claims 12 to 14 wherein the drive member rotates relative to the selector body when the second drive surface is not engaged with the selector body.
